# FASCICULE DE BREVET EUROPEEN

(11) **EP 1 871 589 B1**
(45) Date de publication et mention de la délivrance du brevet: **25.03.2009**
(21) Numéro de dépôt: 06743607.1
(22) Date de dépôt: 28.03.2006
(51) Int. Cl.: B29C 49/48

(54) **DISPOSITIF DE MOULAGE AJUSTABLE EN HAUTEUR POUR LE MOULAGE DE RECIPIENTS THERMOPLASTIQUES DE HAUTEURS DIVERSES**
HÖHENVERSTELLBARE FORMVORRICHTUNG ZUM FORMEN VON THERMOPLASTISCHEN BEHÄLTERN VON VERSCHIEDENER HÖHE
HEIGHT-ADJUSTABLE MOULDING DEVICE FOR MOULDING THERMOPLASTIC RECIPIENTS OF VARIOUS HEIGHTS

(30) Priorité: 04.04.2005 FR 0503305
(43) Date de publication de la demande: 02.01.2008
(73) Titulaire: Sidel Participations, 76930 Octeville Sur Mer (FR)
(72) Inventeur: DANNEBEY, Laurent c/o Sidel Participations, F-76930 Octeville-sur-Mer (FR); CANCHEL, Eric c/o Sidel Participations, F-76930 Octeville-sur-Mer (FR); PITTE, Philippe c/o Sidel Participations, F-76930 Octeville-sur-Mer (FR)
(74) Mandataire: Cabinet Plasseraud
(86) Numéro de dépôt international: PCT/FR2006/000668
(87) Numéro de publication internationale: WO 2006/106209

(56) Documents cités:
- GB-A- 1 425 638
- US-A- 5 968 560
- US-A1- 2004 013 762

## Description

La présente invention concerne de façon générale le domaine des dispositifs de moulage pour la fabrication par soufflage ou étirage-soufflage de récipients, notamment de bouteilles, en matière thermoplastique telle que du PET, et elle concerne plus particulièrement des perfectionnements apportés à ceux de ces dispositifs de moulage prévus pour la fabrication de tels récipients, notamment de telles bouteilles, susceptibles de posséder des hauteurs différentes, lesdits dispositifs de moulage comprenant au moins un moule qui comporte deux demi-moules mobiles l'un par rapport à l'autre, par exemple par rotation autour d'un axe commun fixe, et un fond de moule mobile par rapport aux deux demi-moules par translation axiale, chaque demi-moule comprenant un porte-moule, un porte-coquille fixé au porte-moule et une coquille supportée par le porte-coquille, les deux coquilles et le fond de moule comportant des empreintes de moulage respectives qui, en position de fermeture du moule, définissent ensemble une cavité de moulage, des moyens de compensation de la pression de soufflage étant prévus entre un porte-moule et le porte-coquille associé.

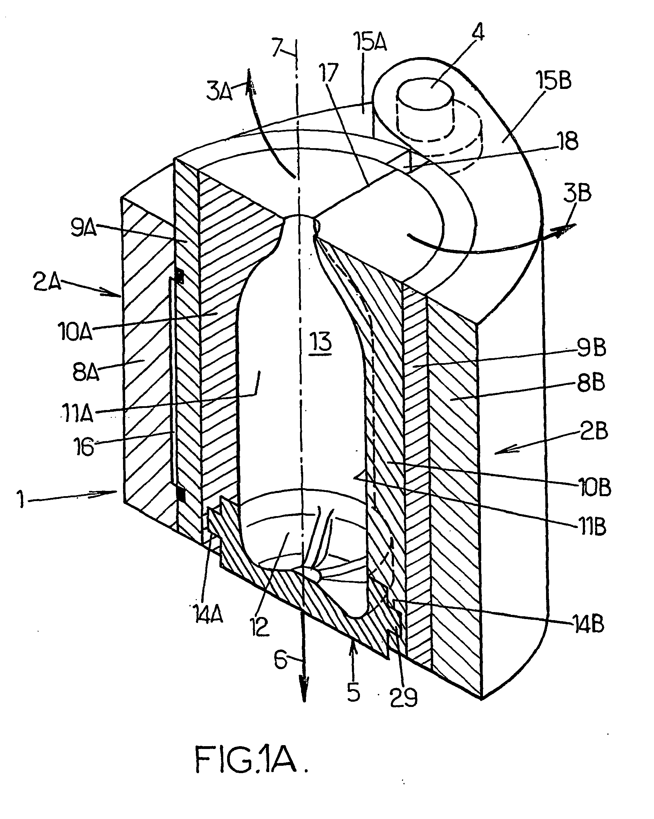

A la figure 1A est illustré de façon schématique, en demi-coupe axiale et en perspective latérale de dessus, un moule, désigné dans son ensemble par la référence 1, d'un dispositif de moulage visé par l'invention. Le moule 1, d'axe 7 longitudinal, comporte deux demi-moules respectivement 2A, 2B mobiles l'un par rapport à l'autre, notamment par rotation (flèches 3A, 3B respectivement) autour d'un axe 4 commun fixe, et un fond 5 de moule mobile par rapport aux deux demi-moules 2A, 2B par translation axiale, illustrée par la flèche 6, coaxialement à l'axe 7 longitudinal du moule.

Chaque demi-moule 2A, 2B comprend un porte-moule respectivement 8A, 8B qui est équipé de bras respectifs 15A, 15B de support articulés sur l'axe 4 précité, un porte-coquille respectivement 9A, 9B fixé au porte-moule correspondant de toute manière connue de l'homme du métier et une coquille respectivement 10A, 10B supportée par le porte-coquille 9A, 9B respectif de toute manière connue de l'homme du métier. Les deux coquilles 10A, 10B et le fond 5 de moule comportent des empreintes 11A, 11B et 12 respectives de moulage qui, en position de fermeture du moule, définissent ensemble une cavité 13 de moulage qui est coaxiale à l'axe 7 longitudinal du moule 1. Une structure de ce type est décrite et représentée par exemple dans le document FR-2 733 176.

Le long des pourtours respectifs coopérants des coquilles 10A, 10B et du fond 5, les coquilles sont munies de gorges 14A, 14B respectives et le fond est muni d'une nervure 29 périphérique saillant radialement et propre à être reçue dans les gorges 14A, 14B en position de fermeture du moule 1 comme illustré à la figure 1A, afin que les coquilles et le fond forment un ensemble mécanique indéformable en présence de la pression de soufflage (de l'ordre de 40x10⁵ Pa). Des agencements de ce type sont représentés par exemple dans les documents FR-2 720 680, FR-2 828 829 et FR-2 841 495.

Enfin, des moyens 16 de compensation de la pression de soufflage sont prévus entre un des porte-moules 8A par exemple et le porte-coquille 9A correspondant, ces moyens 16 de compensation de pression pouvant comprendre notamment une chambre entre le porte-moule 8A et le porte-coquille 9A comme montré à la figure 1A, la chambre pouvant être alimentée en fluide de soufflage, lors du soufflage, par des moyens non visibles sur la figure 1A. Un agencement de ce type peut être trouvé par exemple dans le document FR-2 659 265.

On notera que, dans la représentation de la figure 1A, le plan de coupe du moule 1 fermé est sensiblement diamétral et sensiblement perpendiculaire au plan de joint 17 des coquilles 10A, 10B. On notera également que les porte-coquilles 9A, 9B sont périmétriquement légèrement plus courts que les coquilles de sorte que, le moule 1 étant fermé, il subsiste un intervalle 18 entre leurs bords longitudinaux respectifs affrontés afin d'assurer un appui mutuel correct des coquilles selon le plan de joint 17.

Dans la configuration illustrée à la figure 1A, les coquilles 10A, 10B possèdent une hauteur sensiblement égale à celle des porte-coquilles 9A, 9B respectifs, qui est la hauteur du moule 1. Ainsi, la cavité 13 de moulage possède alors la hauteur maximale admissible dans ce moule et correspond à la hauteur maximale des récipients susceptibles d'être fabriqués avec ce moule.

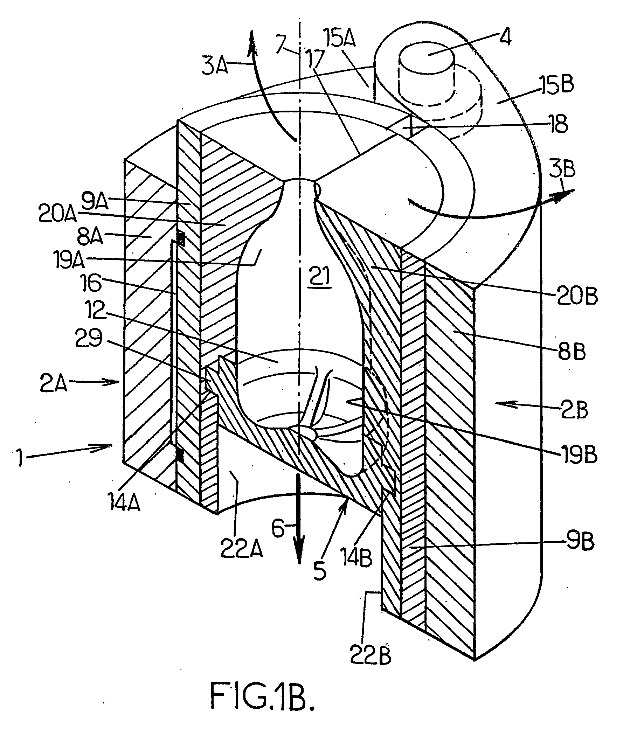

Pour accroître la capacité de production du moule, il est souhaitable qu'il puisse être configuré pour la fabrication non seulement desdits récipients de hauteur maximale, mais aussi pour la fabrication de récipients de hauteurs moindres. A cette fin, il est connu de remplacer les coquilles 10A, 10B munies des empreintes 11A, 11B respectives de moulage par des coquilles 20A, 20B munies d'empreintes 19A, 19B respectives de moulage différentes (en l'occurrence moins hautes) comme montré à la figure 1B. En pratique, les coquilles 20A, 20B sont disposées en haut des porte-coquilles de façon que leurs faces supérieures respectives demeurent au même niveau que les faces supérieures respectives des porte-coquilles, afin qu'il n'y ait pas à modifier la disposition des autres éléments fonctionnels nécessaires au soufflage ou à l'étirage/soufflage du récipient. Les empreintes 19A et 19B ainsi que l'empreinte 12 du fond définissent ensemble, en position de fermeture du moule, une cavité 21 de moulage moins haute que la cavité 13 de la figure 1A. On conserve ainsi l'agencement général du dispositif de moulage, avec les porte-moules 8A, 8B et les porte-coquilles 9A, 9B, ainsi que le fond 5 dont le positionnement axial doit être modifié en relation avec la réduction de hauteur des empreintes de moulage.

Dans cette solution connue, les coquilles 20A, 20B munies des empreintes 19A, 19B de moulage de hauteurs réduites conservent la même hauteur que les coquilles 10A, 10B de la figure 1A. Dans ce cas, les parties inférieures 22A, 22B des coquilles 20A, 20B situées en dessous du fond 5 - c'est-à-dire en dessous des gorges 14A, 14B respectivement - se présentent sous forme de simples parois semi-cylindriques de révolution comme cela apparaît clairement sur la figure 1B. Ces parties inférieures 22A, 22B constituent donc des parties intégrantes des coquilles 20A, 20B respectives auxquelles elles appartiennent et sont d'un seul bloc avec les parties supérieures des coquilles comportant les empreintes 19A, 19B respectivement.

L'avantage de la structure classique qui vient d'être exposée réside dans le fait qu'en position de fermeture du moule, les deux coquilles 20A, 20B sont en appui l'une contre l'autre le long du plan de joint 17, y compris dans le bas du moule. Autrement dit, les deux parties inférieures 22A, 22B forment, ensemble, un appui annulaire cylindrique de révolution sur lequel peuvent prendre appui les deux porte-coquilles 9A, 9B respectivement lorsque la chambre faisant partie des moyens 16 de compensation de pression est soumise à la pression de soufflage. Un tel appui annulaire s'oppose ainsi à une déformation radiale, vers le centre, de la partie inférieure du porte-coquille 9A sur laquelle s'applique la pression de soufflage.

Toutefois, cette structure connue présente concomitamment l'inconvénient notable que les coquilles 20A, 20B sont usinées dans la masse, ce qui entraîne, pour l'usinage des parties inférieures 22A, 22B, l'élimination d'un volume important de matière. Il en résulte un gaspillage de matière, du temps d'usinage, et donc des coûts élevés.

L'invention a essentiellement pour but de proposer une solution technique perfectionnée plus économique à la fois en matière et en temps d'usinage et qui laisse cependant toute liberté d'adapter la hauteur utile des coquilles en fonction de la hauteur effective des récipients à fabriquer.

A ces fins, l'invention propose un dispositif de moulage pour la fabrication par soufflage ou étirage-soufflage de récipients, notamment de bouteilles, en matière thermoplastique telle que du PET et susceptibles de posséder des hauteurs différentes, agencé comme -mentionné au préambule, lequel dispositif se caractérise, étant conformé selon l'invention, par la combinaison des dispositions qui suivent :
- pour la fabrication de récipients ayant la plus grande hauteur (hauteur maximale), les porte-coquilles et coquilles possèdent des hauteurs respectives sensiblement identiques,
- pour la fabrication de récipients ayant des hauteurs moindres que ladite hauteur maximale, les coquilles ont une hauteur moindre que celle des porte-coquilles respectifs et des moyens de renfort sont prévus sur les faces internes respectives des porte-coquilles, dans les portions de ceux-ci ne coopérant pas avec les coquilles respectives, lesdits moyens de renfort étant propres à renforcer radialement les parties des porte-coquilles ne coopérant pas avec les coquilles respectives lorsque les moyens de compensation de pression sont actifs.

Grâce à ces dispositions, on conserve un appui radial aux deux porte-coquilles dans les parties de ceux-ci ne coopérant pas avec les coquilles respectives, en même temps que les coquilles elles-mêmes peuvent alors être fabriquées avec une hauteur réduite en relation avec la hauteur effective des récipients à fabriquer.

Quant aux moyens de renfort, ils peuvent être réalisés de façon économique comme cela apparaîtra plus loin en regard de deux exemples de réalisation concrets.

En pratique, la solution la plus simple, eu égard à l'agencement traditionnel des dispositifs de moulage, consiste en ce que les coquilles soient supportées par les porte-coquilles respectifs de manière telle que leurs bords supérieurs respectifs soient alignés mutuellement, en ce que, pour la fabrication de récipients ayant des hauteurs moindres que ladite hauteur maximale, les parties des porte-coquilles qui ne coopèrent pas avec les coquilles respectives soient les parties inférieures des porte-coquilles, et en ce que les moyens de renfort soient situés dans lesdites parties inférieures des porte-coquilles.

Un premier exemple de réalisation peut consister en ce que les moyens de renfort comprennent, sur chaque porte-coquille, au moins deux barrettes saillant respectivement sur les bords longitudinaux du porte-coquille sensiblement dans la continuité de forme du porte-coquille et ayant une étendue périmétrique telle qu'en position de fermeture du moule, les surfaces frontales des barrettes appartenant aux porte-coquilles respectifs soient en appui mutuel les unes contre les autres en même temps que les coquilles. Avantageusement dans ce cas, les barrettes sont situées à l'extrémité inférieure ou au voisinage immédiat de l'extrémité inférieure des porte-coquilles respectifs.

Une variante de réalisation peut consister en ce que les porte-coquilles comportent des nervures respectives qui sont en saillie radiale vers l'intérieur et qui s'étendent sur toute l'étendue périmétrique des porte-coquilles, le long du bord inférieur ou au voisinage du bord inférieur de ceux-ci, y compris en regard des barrettes.

Un second exemple de réalisation, qui est préféré en pratique en raison de la simplicité de fabrication des pièces composantes qu'il autorise, consiste en ce que les moyens de renfort comprennent deux tronçons semi-tubulaires qui sont situés sur les porte-coquilles respectifs aux emplacements laissés libres par les porte-coquilles de hauteur moindre ; ces deux tronçons semi-tubulaires ont une hauteur sensiblement égale à la différence des hauteurs respectives des porte-coquilles et des coquilles et leurs surfaces frontales longitudinales respectives sont en appui mutuel les unes contre les autres, en même temps que les coquilles, lorsque le moule est en position de fermeture. Dans la réalisation préférée précitée, les tronçons semi-tubulaires sont disposés dans les parties inférieures des porte-coquilles respectifs. Avantageusement, les tronçons semi-tubulaires sont solidarisés mécaniquement aux coquilles respectives de manière à former des ensembles monobloc plus faciles et plus rapides à monter ou démonter et, à cette fin, on prévoit que les tronçons semi-tubulaires ont leur paroi traversée par des alésages longitudinaux propres à recevoir des organes de vissage sur les coquilles respectives. Dans le contexte de cet agencement préféré, les tronçons semi-tubulaires peuvent être fabriqués économiquement à partir de tronçons de tube de diamètre et d'épaisseur adaptés, avec un usinage réduit et sans perte de matière.

L'invention sera mieux comprise à la lecture de la description détaillée qui suit de certains modes de réalisation préférés donnés uniquement à titre d'exemples purement illustratifs. Dans cette description, on se réfère aux dessins annexés sur lesquels :
- la figure 2A est une vue schématique, en coupe diamétrale avec arrachement partiel et en perspective latérale de dessus, analogue à celle de la figure 1B, d'un premier exemple de réalisation d'un moule agencé conformément à l'invention ;
- la figure 2B est une vue de dessus, en coupe -selon la ligne IIB-IIB de la figure 2A, du moule de la figure 2A ;
- la figure 2C est une vue schématique, en coupe diamétrale avec arrachement partiel et en perspective latérale de dessus, analogue à la figure 2A, d'une variante de réalisation du moule des figures 2A et 2B ;
- la figure 3A est une vue schématique, en coupe diamétrale et en perspective latérale de dessus, analogue à celle de la figure 1B, d'un second mode de réalisation, qui est préféré, d'un moule agencé conformément à l'invention ; et
- la figure 3B est une vue de dessus, en coupe selon la ligne IIIB-IIIB de la figure 3A, du moule de la figure 3A.

Dans la suite de la description, on conservera les mêmes références numériques qu'à la figure 1B pour désigner les organes analogues.

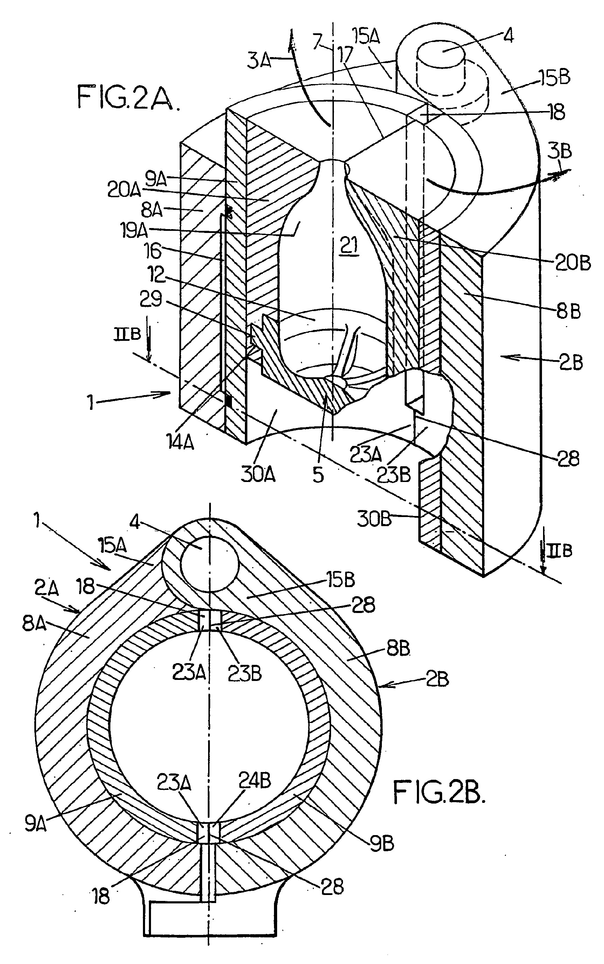

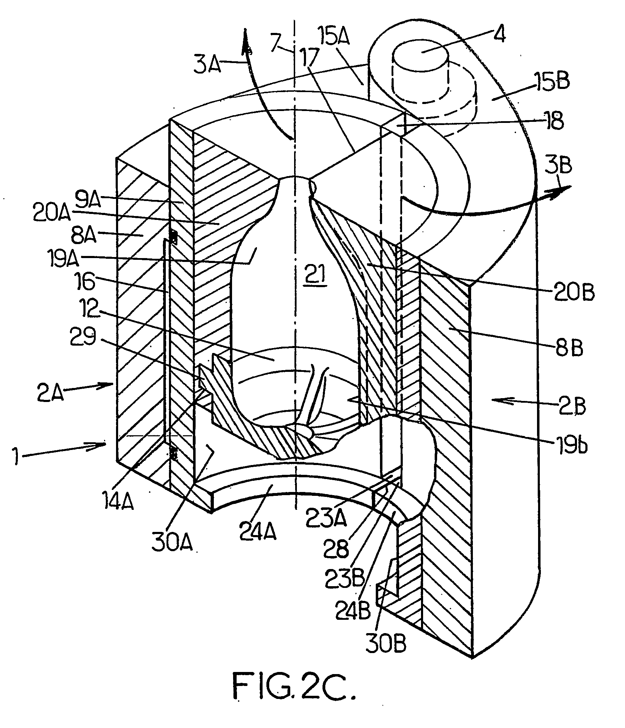

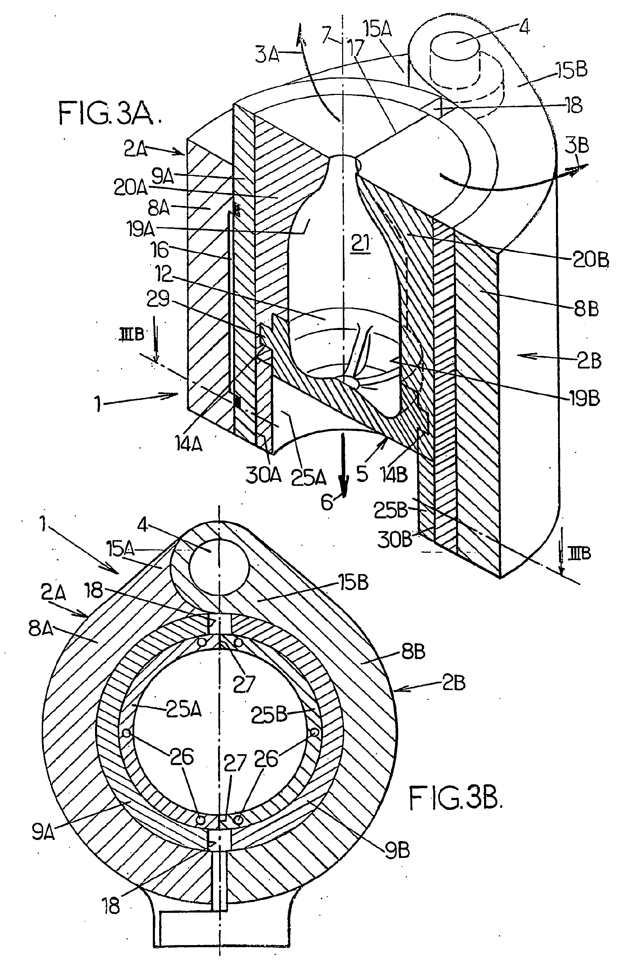

Conformément à l'invention, on prévoit la combinaison des dispositions qui suivent :
- pour la fabrication de récipients ayant la plus grande hauteur (hauteur maximale), les porte-coquilles 9A, 9B et coquilles 10A, 10B possèdent des hauteurs respectives sensiblement identiques, comme montré à la figure 1A ;
- pour la fabrication de récipients ayant des hauteurs moindres que ladite hauteur maximale, les coquilles 20A, 20B ont une hauteur moindre que celle des porte-coquilles 9A, 9B respectifs comme visible aux figures 2A, 2C et 3A et des moyens de renfort sont prévus sur les faces internes respectives des porte-coquilles 9A, 9B dans les parties 30A, 30B de ceux-ci ne coopérant pas avec les coquilles 20A, 20B respectives, lesdits moyens de renfort étant propres à renforcer radialement les parties 30A, 30B des porte-coquilles ne coopérant pas avec les coquilles 20A, 20B respectives lorsque les moyens de compensation de pression sont actifs.

Différentes solutions techniques peuvent être envisagées pour constituer lesdits moyens de renfort. Plusieurs exemples vont maintenant être exposés plus particulièrement dans le contexte, plus vraisemblablement mis en oeuvre en pratique, où les coquilles de hauteur moindre sont disposées en haut des porte-coquilles respectifs de manière telle que leurs bords supérieurs respectifs soient sensiblement alignés mutuellement et où les parties 30A, 30B des porte-coquilles ne coopérant pas avec les coquilles sont situées inférieurement.

En se reportant maintenant plus spécifiquement aux figures 2A et 2B, il y est illustré un premier exemple de tels moyens de renfort. Dans cet exemple, on prévoit que les moyens de renfort comprennent, sur chaque porte-coquille 9A, 9B, au moins deux barrettes 23A, 23B saillant respectivement sur les deux bords longitudinaux du porte-coquille sensiblement dans la continuité de forme du porte-coquille (une seule barrette 23A et une seule barrette 23B sont visibles sur la figure 2A). Les barrettes 23A, 23B ont une étendue périmétrique telle que, dans la position de fermeture du moule montrée aux figures 2A et 2B, les surfaces frontales des barrettes 23A, 23B appartenant aux porte-coquilles 9A, 9B respectifs sont en appui mutuel les unes contre les autres en 28, en même temps que les coquilles. Dans la configuration de montage des coquilles plus spécifiquement envisagée sur les figures 2A et 2B, les barrettes 23A, 23B sont situées le long du bord inférieur ou au voisinage immédiat du bord inférieur des porte-coquilles 9A, 9B respectifs.

Grâce à cette disposition, lors de la mise en pression de la chambre des moyens 16 de compensation de pression, la partie inférieure 22A du porte-coquille 9A trouve un appui contre l'autre porte-coquille 9B et ne risque pas de se déformer.

Une variante de réalisation, illustrée à la figure 2C, peut consister à mieux renforcer la partie inférieure des porte-coquilles 9A, 9B par des nervures 24A, 24B respectives qui sont en saillie radiale vers l'intérieur et qui s'étendent sur toute l'étendue périmétrique des porte-coquilles, le long du bord inférieur ou au voisinage du bord de ceux-ci, y compris en regard des barrettes 23A, 23B. On obtient ainsi une rigidification accrue des parties inférieures 22A, 22B des porte-coquilles 9A, 9B.

Les solutions qui viennent d'être exposées sont efficaces et peuvent être mises en oeuvre au moins dans certaines conditions d'exploitation des moules. Elles présentent toutefois l'inconvénient d'entraîner une modification structurelle des porte-coquilles, ce qui peut être jugé inacceptable par certains exploitants.

Pour éviter cet inconvénient, on prévoit, dans un mode de réalisation préféré, illustré aux figures 3A et 3B, de constituer les moyens de renfort avec deux tronçons 25A, 25B semi tubulaires qui sont situés aux parties 30A, 30B des porte-coquilles qui sont laissés libres par les coquilles 20A, 20B de hauteur moindre, en l'occurrence sous les coquilles dans l'exemple pratique illustré. Les tronçons 25A, 25B ont une hauteur sensiblement égale à la différence des hauteurs respectives des porte-coquilles 9A, 9B et des coquilles 20A, 20B et ils possèdent sensiblement le même périmètre extérieur que les coquilles de sorte que leurs surfaces frontales longitudinales respectives sont en appui mutuel les unes contre les autres en 27, en même temps que les coquilles, lorsque le moule est en position de fermeture comme montré aux figures 3A et 3B.

L'intérêt pratique de cette solution réside dans le fait que les tronçons 25A, 25B semi-tubulaires peuvent être obtenus à partir d'un tube de diamètre et d'épaisseur appropriés, avec un temps d'usinage minimum et sans perte sensible de matière, et ils ne sont utilisés dans le moule que lorsque des coquilles 20A, 20B ayant une hauteur moindre que celle des porte-coquilles (9A, 9B) respectifs sont mises en oeuvre.

Avantageusement, les tronçons 25A, 25B semi-tubulaires ont leur paroi traversée par des alésages 26 longitudinaux propres à recevoir des organes (non montrés) pour permettre leur fixation, notamment par vissage, sur les coquilles 20A, 20B respectives. On solidarise ainsi mécaniquement les tronçons semi-tubulaires et les coquilles respectives pour constituer des ensembles d'un seul tenant plus faciles à manipuler pour le montage/démontage.

## Revendications

1. Dispositif de moulage pour la fabrication par soufflage ou étirage-soufflage de récipients, notamment de bouteilles, en matière thermoplastique telle que du PET et susceptibles de posséder des hauteurs différentes, ledit dispositif de moulage comprenant au moins un moule (1) qui comporte deux demi-moules (2A, 2B) mobiles l'un par rapport à l'autre (flèches 3A, 3B) et un fond (5) de moule mobile par rapport aux deux demi-moules par translation axiale (flèche 6), chaque demi-moule (2A, 2B) comprenant un porte-moule (8A, 8B), un porte-coquille (9A, 9B) fixé au porte-moule et une coquille (10A, 10B ; 20A, 20B) supportée par le porte-coquille, les deux coquilles et le fond de moule comportant des empreintes (11A, 11B ; 19A, 19B) de moulage respectives qui, en position de fermeture du moule, définissent ensemble une cavité (13 ; 21) de moulage, des moyens (16) de compensation de la pression de soufflage étant prévus entre un porte-moule (8A) et le porte-coquille (9A) associé,
**caractérisé par** la combinaison des dispositions qui suivent :
- pour la fabrication de récipients ayant la plus grande hauteur, les porte-coquilles (9A, 9B) et coquilles (10A, 10B) possèdent des hauteurs respectives sensiblement identiques,
- pour la fabrication de récipients ayant des hauteurs moindres que ladite hauteur maximale, les coquilles (20A, 20B) ont une hauteur moindre que celle des porte-coquilles (9A, 9B) respectifs et des moyens de renfort sont prévus sur les faces internes respectives des porte-coquilles (9A, 9B) dans les parties (30A, 30B) de ceux-ci ne coopérant pas avec
les coquilles respectives, lesdits moyens de renfort étant propres à renforcer radialement les parties des porte-coquilles ne coopérant pas avec les coquilles respectives lorsque les moyens de compensation de pression sont actifs.

2. Dispositif de moulage selon la revendication 1, **caractérisé en ce que** les coquilles (20A, 20B) sont supportées par les porte-coquilles (9A, 9B) respectifs de manière telle que leurs bords supérieurs respectifs soient sensiblement alignés mutuellement, **en ce que**, pour la fabrication de récipients ayant des hauteurs moindres que ladite hauteur maximale, les parties (30A, 30B) des porte-coquilles qui ne coopèrent pas avec les coquilles respectives sont les parties inférieures des porte-coquilles, et **en ce que** les moyens de renfort sont situés dans lesdites parties (30A, 30B) inférieures des porte-coquilles (9A, 9B).

3. Dispositif de moulage selon la revendication 2, **caractérisé en ce que** les moyens de renfort comprennent, sur chaque porte-coquille (9A, 9B), au moins deux barrettes (23A, 23B) saillant respectivement sur les bords longitudinaux du porte-coquille sensiblement dans la continuité de forme du porte-coquille et ayant une étendue périmétrique telle qu'en position de fermeture du moule, les surfaces frontales des barrettes appartenant aux porte-coquilles respectifs soient en appui mutuel les unes contre les autres (en 28) en même temps que les coquilles (20A, 20B).

4. Dispositif de moulage selon la revendication 3, **caractérisé en ce que** les barrettes (23A, 23B) sont situées le long du bord inférieur ou au voisinage immédiat du bord inférieur des porte-coquilles (9A, 9B) respectifs.

5. Dispositif de moulage selon la revendication 4, **caractérisé en ce que** les porte-coquilles (9A, 9B) comportent des nervures (24A, 24B) respectives qui sont en saillie radiale vers l'intérieur et qui s'étendent sur toute l'étendue périmétrique des porte-coquilles, le long du bord inférieur ou au voisinage du bord de ceux-ci, y compris en regard des barrettes (23A, 23B).

6. Dispositif de moulage selon la revendication 2, **caractérisé en ce que** les moyens de renfort comprennent deux tronçons (25A, 25B) semi-tubulaires qui sont situés sous les coquilles, qui ont une hauteur sensiblement égale à la différence des hauteurs respectives des porte-coquilles (9A, 9B) et des coquilles (20A, 20B) et qui possèdent sensiblement le même périmètre extérieur que les coquilles (20A, 20B) de sorte que les surfaces frontales longitudinales respectives des deux tronçons (25A, 25B) sont en appui mutuel les unes contre les autres (en 27) lorsque le moule est en position de fermeture.

7. Dispositif de moulage selon la revendication 6, **caractérisé en ce que** les tronçons (25A, 25B) semi-tubulaires ont leur paroi traversée des alésages (26) longitudinaux propres à recevoir des organes pour permettre leur fixation, notamment par vissage, sur les coquilles (20A, 20B) respectives.

## Claims

1. A molding device for manufacturing containers, particularly bottles, made of thermoplastic, such as PET, by blow-molding or stretch-blow-molding, which containers may have different heights, said molding device comprising at least one mold (1) which comprises two mold halves (2A, 2B) arranged to move relative to one another (arrows 3A, 3B) and a mold base (5) arranged to move relative to the two mold halves in axial translation (arrow 6), each mold half (2A, 2B) comprising a mold holder (8A, 8B), a shell holder (9A, 9B) fixed to the mold holder and a shell (10A, 10B; 20A, 20B) supported by the shell holder, the two shells and the mold base comprising respective molding cavity portions (11A, 11B; 19A, 19B) which, when the mold is in the closed position, together define a molding cavity (13; 21), means (16) for compensating the blowing pressure being provided between a mold holder (8A) and the respective shell holder (9A),
**characterized by** the combination of following features:
- when manufacturing containers of the tallest height, the shell holders (9A, 9B) and shells (10A, 10B) have substantially identical respective heights,
- when manufacturing containers of heights less than said maximum height, the shells (20A, 20B) have a height less than that of the respective shell holders (9A, 9B) and reinforcing means are provided on the respective internal faces of the shell holders (9A, 9B) in those parts (30A, 30B)
thereof that are not engaging the respective shells, said reinforcing means being adapted to reinforce radially those parts of the shell holders that are not engaging the respective shells when the pressure-compensating means are active.

2. The molding device as claimed in claim 1, **characterized in that** the shells (20A, 20B) are supported by the respective shell holders (9A, 9B) in such a way that respective upper edges thereof are substantially aligned with one another, **in that**, when manufacturing containers of heights less than said maximum height, those parts (30A, 30B) of the shell holders which are not engaging the respective shells are the lower parts of the shell holders, and **in that** the reinforcing means are located in said lower parts (30A, 30B) of the shell holders (9A, 9B).

3. The molding device as claimed in claim 2, **characterized in that** the reinforcing means comprise, on each shell holder (9A, 9B), at least two strips (23A, 23B) projecting from the respective longitudinal edges of the shell holder substantially as a continuation of the shape of the shell holder and having such a perimetrical extent that, when the molding is in the closed position, the frontal surfaces of the strips belonging to the respective shell holders rest against one another (at 28) just as do the shells (20A, 20B).

4. The molding device as claimed in claim 3, **characterized in that** the strips (23A, 23B) are located along the lower edge or in close proximity to the lower edge of the respective shell holders (9A, 9B).

5. The molding device as claimed in claim 4, **characterized in that** the shell holders (9A, 9B) have respective ribs (24A, 24B) which project radially inwards and extend over the entire perimetrical extent of the shell holders, along the lower edge or in close proximity to the lower edge thereof, even facing the strips (23A, 23B).

6. The molding device as claimed in claim 2, **characterized in that** the reinforcing means comprise two semi-tubular portions (25A, 25B) which are situated under the shells, which have a height substantially equal to the difference in respective heights of the shell holders (9A, 9B) and shells (20A, 20B) and which have substantially the same external perimeter as the shells (20A, 20B) so that the respective longitudinal frontal surfaces of the two portions (25A, 25B) rest against one another (at 27) when the mold is in the closed position.

7. The molding device as claimed in claim 6, **characterized in that** the semi-tubular portions (25A, 25B) have wall being passed through by longitudinal bores (26) adapted for housing components suitable for allowing fastening thereof, particularly by screwing, to the respective shells (20A, 20B).

## Patentansprüche

1. Formvorrichtung zur Herstellung von Behältern, insbesondere von Flaschen in verschiedenen Höhen aus thermoplastischen Stoffen wie PET durch Blasen oder Streckblasen, wobei die Formvorrichtung mindestens eine Form (1) umfasst, die zwei zueinander bewegliche (Pfeile 3A, 3B) Formhälften (2A, 2B) und einen zu den zwei Formhälften durch axiale Verschiebung beweglichen (Pfeil 6) Boden (5) der Form umfasst, wobei jede Formhälfte (2A, 2B) einen Formhalter (8A, 8B), einen am Formhalter befestigten Kokillenhalter (9A, 9B) und eine vom Kokillenhalter getragene Kokille (10A, 10B; 20A, 20B) umfasst, wobei die zwei Kokillen und der Boden der Form jeweils Formnester (11A, 11B; 19A, 19B) umfassen, die in der Schließposition der Form gemeinsam einen Formhohlraum (13; 21) begrenzen, wobei Blasdruckausgleichmittel (16) zwischen einem Formhalter (8A) und dem zugehörigen Kokillenhalter (9A) vorgesehen sind,
**gekennzeichnet durch** die Kombination der folgenden Vorkehrungen:
- für die Herstellung von Behältern mit der größten Höhe haben die Kokillenhalter (9A, 9B) und Kokillen (10A, 10B) jeweils im Wesentlichen identische Höhen;
- für die Herstellung von Behältern mit geringerer Höhe als der maximalen Höhe haben die Kokillen (20A, 20B) eine geringere Höhe als die jeweiligen Kokillenhalter (9A, 9B) und es sind Verstärkungsmittel auf den jeweiligen Innenseiten der Kokillenhalter (9A, 9B) in den Teilen (30A, 30B) vorgesehen, die nicht mit den jeweiligen Kokillen zusammenwirken, wobei die Verstärkungsmittel dazu geeignet sind, die Teile der Kokillenhalter, die nicht mit den jeweiligen Kokillen zusammenwirken radial zu verstärken, wenn die Druckausgleichmittel aktiv sind.

2. Formvorrichtung nach Anspruch 1, **dadurch gekennzeichnet, dass** die Kokillen (20A, 20B) von den jeweiligen Kokillenhaltern (9A, 9B) so getragen werden, dass ihre jeweiligen oberen Ränder im Wesentlichen miteinander fluchten, dass für die Herstellung von Behältern mit geringeren Höhen als der maximalen Höhe die Teile (30A, 30B) der Kokillenhalter, die nicht mit den jeweiligen Kokillen zusammenwirken, die unteren Teile der Kokillenhalter sind und dass sich die Verstärkungsmittel in den unteren Teilen (30A, 30B) der Kokillenhalter (9A, 9B) befinden.

3. Formvorrichtung nach Anspruch 2, **dadurch gekennzeichnet, dass** die Verstärkungsmittel auf jedem Kokillenhalter (9A, 9B) mindestens zwei Stege (23A, 23B) umfassen, die jeweils über die Längsränder des Kokillenhalters im Wesentlichen in die Kontinuität der Form des Kokillenhalters ragen und einen solchen Umfang haben, dass in der Schließposition der Form die Vorderflächen der Stege, die zu den jeweiligen Kokillenhaltern gehören, zur gleichen Zeit wie die Kokillen (20A, 20B) gegeneinander drücken (in 28).

4. Formvorrichtung nach Anspruch 3, **dadurch gekennzeichnet, dass** sich die Stege (23A, 23B) entlang dem unteren Rand oder in unmittelbarer Nachbarschaft des unteren Randes der jeweiligen Kokillenhalter (9A, 9B) befinden.

5. Formvorrichtung nach Anspruch 4, **dadurch gekennzeichnet, dass** die Kokillenhalter (9A, 9B) jeweils Rippen (24A, 24B) umfassen, die radial nach innen ragen und die sich über den gesamten Umfang der Kokillenhalter entlang dem unteren Rand oder in Nachbarschaft des Randes derselben, einschließlich gegenüber den Stegen (23A, 23B), erstrecken.

6. Formvorrichtung nach Anspruch 2, **dadurch gekennzeichnet, dass** die Verstärkungsmittel zwei halbröhrenförmige Abschnitte (25A, 25B) umfassen, die sich unter den Kokillen befinden, die eine Höhe haben, die im Wesentlichen gleich der Differenz der jeweiligen Höhen der Kokillenhalter (9A, 9B) und der Kokillen (20A, 20B) ist und die im Wesentlichen den gleichen Außenumfang haben wie die Kokillen (20A, 20B), so dass die jeweiligen Längsvorderflächen der beiden Abschnitte (25A, 25B) gegeneinander drücken (in 27), wenn die Form in Schließposition ist.

7. Formvorrichtung nach Anspruch 6, **dadurch gekennzeichnet, dass** die Wände der halbröhrenförmigen Abschnitte (25A, 25B) mit Längsbohrungen (26) versehen sind, die dazu geeignet sind, Bauteile aufzunehmen, um ihre Befestigung, insbesondere durch Schrauben, an den jeweiligen Kokillen (20A, 20B) zu ermöglichen.
